Europäisches Patentamt

European Patent Office

Office européen des brevets

(11) Veröffentlichungsnummer: **0 273 298 B1**

(12) **EUROPÄISCHE PATENTSCHRIFT**

(45) Veröffentlichungstag der Patentschrift: **17.03.93**

(21) Anmeldenummer: **87118595.5**

(22) Anmeldetag: **15.12.87**

(51) Int. Cl.⁵: **C09D 1/00**, C08J 7/04,
C09D 5/38, B05D 3/02,
B44D 3/12

(54) **Verfahren zur Beschichtung von Teilen.**

(30) Priorität: **23.12.86 DE 3644116**

(43) Veröffentlichungstag der Anmeldung:
**06.07.88 Patentblatt 88/27**

(45) Bekanntmachung des Hinweises auf die
Patenterteilung:
**17.03.93 Patentblatt 93/11**

(84) Benannte Vertragsstaaten:
**AT DE FR GB IT**

(56) Entgegenhaltungen:
**EP-A- 0 150 650**
**DE-A- 2 140 208**

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Puchinger, Franz
Wagnerweg 2
W-8068 Niederscheyern(DE)**
Erfinder: **Wydra, Gerhard
Ringstrasse 34
W-8042 Oberschleissheim(DE)**

Rank Xerox (UK) Business Services
(3.10/3.5x/3.0.1)

**Beschreibung**

Die Erfindung betrifft ein Verfahren zur Beschichtung von Teilen mit einem erosionsbeständigen, lackartigen Überzug aus etwa gleichen Teilen einer Bindemittellösung und pulverisiertem Metall, bei dem eine Bindemittellösung mit 10 - 20 Gew.% $CrO_3$, 20 - 30 Gew.% $H_3PO_4$ und 20 - 30 Gew.% $H_3PO_3$ verwendet wird und anschließend der Lack durch Erhitzen ausgehärtet wird.

Ein Verfahren dieser Gattung wird in der EP-A-0 150 650 offenbart. Aufgrund der Zusammensetzung des Bindemittels ist für eine haltbare Beschichtung von Bauteilen eine Aushärtetemperatur notwendig, die deutlich über 300 °C liegt. Aufgrund dieser relativ hohen Aushärtetemperatur können nach dem vorbekannten Verfahren nur metallische Gegenstände beschichtet werden.

Aufgabe der vorliegenden Erfindung ist es deshalb, ein gattungsgemäßes Verfahren anzugeben, welches nicht auf die Beschichtung von Metallteilen beschränkt ist.

Erfindungsgemäß wird die gestellte Aufgabe dadurch gelöst, daß bei dem eingangs genannten gattungsgemäßen Verfahren die Anteile an phosphoriger Säure ($H_3PO_3$) und Phosphorsäure ($H_3PO_4$) etwa gleich sind und die Bindemittellösung ferner $AlPO_4$ enthält, wobei der Anteil an $AlPO_4$ bei höchstens 5 Gew.%, insbesondere unter 2,5 Gew.% liegt.

Bei Durchführung des Verfahrens mit der genannten Bindemittelzusammensetzung reichen Einbrenntemperaturen aus, die unterhalb von 200 °C liegen. Der wesentliche Vorteil des erfindungsgemäßen Beschichtungsverfahrens besteht also darin, daß erstmals Bauteile aus Kunststoff mit einem derartigen erosionsbeständigen Überzug versehen werden können und somit für derartige Teile vollkommen neue Anwendungsmöglichkeiten in korrosiver Umgebung erschlossen werden können.

Weitere Ausgestaltungen des erfindungsgemäßen Verfahrens sind in den Unteransprüchen sowie in der Beschreibung eines Ausführungsbeispiels enthalten.

Mit Hilfe folgender Rezeptur des Bindemittels gelang es, die Einbrenntemperatur des Überzugs auf 150 bis 190 Grad Celcius zu senken, also auf eine Temperatur die im Bereich der heißhärtenden Epoxid- bzw. Polyimidharze liegt.

Dies gelang z.B. mit folgender Rezeptur des Bindemittels:

| | |
|---|---|
| $CrO_3$ | 10-20 Gewichtsteile |
| $H_3PO_4$ | 20-30 Gewichtsteile |
| $H_3PO_3$ | 20-30 Gewichtsteile |
| $AlPO_4$ | 0-5 Gewichtsteile und Rest $H_2O$ |

Rezepturbeispiel 1

| | |
|---|---|
| 100 Gew. Teile | Bindemittel |
| 100 Gew. Teile | Alu-Pulver nach Standard |

Rezepturbeispiel 2

| | |
|---|---|
| 100 Gew. Teile | Bindemittel |
| 100 Gew. Teile | Titanpulver E (Fa.Degussa) |

Ein "Verdichten" der eingebrannten Überzüge durch Glasperlenstrahlen, Scheuern, Bürsten oder ähnlichen Verfahren bwirkt, daß die Überzüge elektrisch leitfähig werden (Widerstand = 1 Ohm). Bei Verwendung von Titanpulver als Pigment erreicht man ohne Nachbehandlung einen elektrischen Widerstand von ca. 200 Ohm.

Die elektrische Leitfähigkeit ist bei vielen Bauteilen erwünscht (z.B. gegen Blitzschlag). Galvanische Schichten können für diesen Anwendungsfall wegen der zu geringen Haftfestigkeit nicht verwendet werden, bzw. erfordern erheblichen zusätzlichen Aufwand (Substrat-Vorbehandlung).

Die Haftfestigkeit der anorganischen Überzüge ist gut; durch Einbringen von z.B. Aluminiumpulver in die Preßform und damit in das Oberflächenharz kann die Haftfestigkeit noch erhöht werden (Einbringen i.d. Art d. Packzementierung)

Infolge des wässrigen Aufbaues des Überzuges kann er auch durch Mikrowelle eingebracht werden, dadurch schonendere Behandlung der Kunststoffteile.

Eine bevorzugte Anwendung der Erfindung ist das Überziehen von Bauteilen aus faserverstärkten Kunststoffen, insbesondere Bauteilen der Luft- und Raumfahrtindustrie, wie Triebwerksgehäuseteile oder Fanschaufeln aus faserverstärkten Kunststoffen, wie sie in Fantriebwerken üblich sind, dennoch auch für Propfans oder andere Verdichter, Gebläse, Pumpen usw. ohne auf diese industriellen Anwendungen beschränkt zu sein.

Anstelle der Heißhärtung oder durch Mikrowellen kann auch durch elektromagnetische oder hochenergetische Strahlung, insbesondere durch UV-Strahlung eine Härtung und/oder Vernetzung des Überzugs erfolgen. Auch andere Pulverpartikel als erwähnt können eingebracht werden.

Geeignete Substrate sind: Epoxidharze, Polyimidharze, Phenolharze sowohl gefüllt und ungefüllt als auch faserverstärkte (Tabelle 1).

## Tabelle 1

Anwendung von faserverstärkten Werkstoffen als Substrate

| Anwendungsbereich | Bauteil, Baugruppe | Bevorzugte Verstärkungsfasern | Bevorzugte Matrixsysteme | Hauptsächliche Gründe für die Anwendung |
|---|---|---|---|---|
| Flugzeugbau | Komplette Zellen für Sport- und Leichtflugzeuge, Hubschrauber, Hubschrauber-Rotoren, Propeller. | E-Glas als Gewebe, als Prepreg-Gewebe, auch C-Faser-Hybride. | Modifizierte Bisphenol-A-Epoxide, Cycloaliphat-EP. | Geringeres Gewicht, hohe aerodynamische Form- und Oberflächengüte, Wartungsfreiheit, billigere Serienfertigung. |
|  | Flugzeuge (Jet): Komplette Leitwerksstrukturen, Rumpf- und Tragflächenbeplankungen und -versteifungen, Klappen, Ruder, Bremsklappen, Verkleidungen, Racome. | E-Glas, S-Glas-Faser, C-HT- und C-HM-Faser, Bor- und Aramidfaser als Prepreggewebe oder Unidirektional-Prepreg, d.h. in Kombination mehrerer Fasern (Hybride). | Cycloaliphatische Epoxide, modifizierte Novolak-EP, neuere Entwicklungen für höhere Temperaturen: Polyimide (PI) und Abkömmlinge, Polybenzimidazole (PBI). | Gewichtsersparnis bei höherer Steifigkeit und Festigkeit (bis 25 %). Einsparung von teuren Rohstoffen und Fertigungsmethoden. Verringerung der Anzahl von Einzelteilen durch Integralbauweisen. Verringerung des Leergewichts, Vergrößerung der Zuladung, Treibstoffeinsparung. |
| Triebwerkbau | «Kalter Teil» Verdichterbeschaufelung (Rotor und Stator), Bläser/Fan-Tschaufeln. Verdichter-Rotorscheiben. Einlaufverkleidungen, Einlaufgehäuse, Lagerstern, Verdichtergehäuse, Fan-, Zwischen- und Außengehäuse, Getriebegehäuse. | S-Glas-Faser, C-HT- und C-HM-Faser, Aramid-(KEVLAR-49)-Faser. Als Prepreggewebe, Unidirektional-Prepreg, Kurzfaser-UD-Prepreg, Kurzfaser-Preßmasse. | In hochtemperaturbeständigen Kunstharzen: Novolak-Epoxide (EP), Polyimide (PI) und Abkömmlinge. Für kompliziert geformte, aber niedrig belastete Bauteile auch in temperaturbeständigen Thermoplasten. | Gewichtsersparnis bei höherer, gezielt steuerbarer Steifigkeit und Festigkeit. Steuerung von Wärmeausdehnungskoeffizienten (Spiel Schaufelspitze/Gehäuse), bessere Schwingungskontrolle und Dämpfung. Verringerung der Massenträgheitsmomente. Einsparung von teuren Rohstoffen und Fertigungsverfahren. |

Faserverstärkte Werkstoffe

**Patentansprüche**

1. Verfahren zur Beschichtung von Teilen mit einem errosionsbeständigen, lackartigen Überzug aus etwa gleichen Teilen einer Bindemittellösung und pulverisiertem Metall, bei dem eine Bindemittellösung mit 10 - 20 Gew.% $CrO_3$, 20 - 30 Gew.% $H_3PO_4$ und 20 - 30 Gew.% $H_3PO_3$ verwendet wird und anschließend der Lack durch Erhitzen ausgehärtet wird, dadurch gekennzeichnet, daß die Anteile an $H_3PO_3$ und $H_3PO_4$ etwa gleich sind und die Bindemittellösung ferner $AlPO_4$ enthält, wobei der Anteil an $AlPO_4$ bei höchstens 5 Gew.% insbesondere unter 2,5 Gew.% liegt.

2. Verfahren nach Anspruch 1, dadurch gekennzeichnet, daß als pulverisiertes Metall eines aus folgender Gruppe verwendet wird: Al, Ag, Au, Cu, Ti, Pd, Sn oder Legierungen auf der Basis dieser Metalle.

3. Verfahren nach Anspruch 1, dadurch gekennzeichnet, daß die Einbrenntemperatur < 200 °C vorzugsweise zwischen 150 und 190 °C beträgt.

4. Verfahren nach Anspruch 1, dadurch gekennzeichnet, daß das pulverisierte Metall Titanpulver ist, das in gleichen Gewichtsanteilen zur Bindemittellösung zugegeben wird.

5. Verwendung des Verfahrens nach einem der vorhergehenden Ansprüche zur Beschichtung von Kunststoffbauteilen.

6. Verwendung des Verfahrens nach einem der vorhergehenden Ansprüche zur Beschichtung von Bauteilen aus heißhärtenden Epoxid- und/oder Polyimidharzen.

**Claims**

1. A method of covering parts with an erosion-resistant, lacquer-type coating comprising substantially equal proportions of a bonding agent solution and pulverised metal, wherein a bonding agent solution having 10 - 20% by weight $CrO_3$, 20 - 30% by weight $H_3PO_4$ and 20 - 30% by weight $H_3PO_3$ is used and the lacquer then harded by heating, characterised in that the proportions of $H_3PO_3$ and $H_3PO_4$ are substantially equal and the bonding agent solution furthermore contains $AlPO_4$, the proportion of $AlPO_4$ being at the most 5% by weight and in particular below 2.5% by weight.

2. A method according to claim 1, characterised in that one from the following group is used as pulverised metal: Al, Ag, Au, Cu, Ti, Pd, Sn or alloys based on these metals.

3. A method according to claim 1, characterised in that the stoving temperature is < 200°C, preferably between 150°C and 190°C.

4. A method according to claim 1, characterised in that the pulverised metal is titanium powder which is added to the bonding agent solution in equal weight proportions.

5. Application of the method according to any one of the preceding claims for covering plastics components.

6. Application of the method according to any one of the preceding claims for covering components comprising heat-hardened epoxide and/or polyimide resins.

**Revendications**

1. Procédé d'enduction de pièces avec un revêtement résistant à l'érosion, en forme de laque, composé sensiblement à parties égales d'une solution de liant et de métal pulvérisé, dans lequel une solution de liant de 10 à 20 % en poids de $CrO_3$, de 20 à 30 % en poids de $H_3PO_4$ et de 20 à 30 % en poids de $H_3PO_3$ est employée et la laque est ensuite durcie par chauffage, caractérisé en ce que les proportions de $H_3PO_3$ et de $H_3PO_4$ sont sensiblement égales et la solution de liant contient également de l'$AlPO_4$, la proportion d'$AlPO_4$ étant au maximum de 5 % en poids, en particulier inférieure à 2,5 % en poids.

2. Procédé selon la revendication 1, caractérisé en ce qu'un métal pulvérisé choisi parmi le groupe suivant est employé : Al, Ag, Au, Cu, Ti, Pd, Sn ou des alliages sur la base de ces métaux.

3. Procédé selon la revendication 1, caractérisé en ce que la température de cuisson est inférieure à 200 ° C et est comprise de préférence entre 150 et 190 ° C.

4. Procédé selon la revendication 1, caractérisé en ce que le métal pulvérisé est de la poudre de titane qui est ajoutée à la solution de liant dans des proportions en poids identiques.

5. Emploi du procédé selon l'une des revendications précédentes, pour revêtir des pièces en matière plastique.

6. Emploi du procédé selon l'une des revendications précédentes, pour revêtir des pièces en résines époxydiques ou polyimides thermodurcissables.